# FASCICULE DE BREVET EUROPEEN

(11) **EP 1 977 912 B1**
(45) Date de publication et mention de la délivrance du brevet: **24.03.2010**
(21) Numéro de dépôt: 08103282.3
(22) Date de dépôt: 01.04.2008
(51) Int. Cl.: B60C 23/04

(54) **Pneumatique comprenant un organe électronique et procédé de fabrication d'un tel pneumatique**
Reifen, der ein elektronisches Bauelement enthält, und Herstellungsverfahren eines solchen Reifens
Tyre comprising an electronic element and method of manufacturing such a tyre

(30) Priorité: 03.04.2007 FR 0754241
(43) Date de publication de la demande: 08.10.2008
(73) Titulaire: Société de Technologie Michelin, 63000 Clermont-Ferrand (FR); Michelin Recherche et Technique S.A., 1763 Granges-Paccot (CH)
(72) Inventeur: Adamson, John David, Greenville, SC 29605 (US); Barton, Christopher B., Clemson, SC 29631 (US); Kelly, Charles E., Little River, SC 29566 (US); Smith, Cameron Earl, Greenville, SC 29615 (US); Alff, Denis, 63200 Malauzat (FR); Lion, Mickael, 63000 Clermont-Ferrand (FR); Tupinier, Mathieu, 63400 Chamalières (FR); Wiel, Pierre, 63200 Yssac-la-Tourette (FR)
(74) Mandataire: Dequire, Philippe Jean-Marie Denis

(56) Documents cités:
- EP-A- 1 223 056
- EP-A- 1 439 079
- EP-A1- 0 505 905
- EP-A1- 0 537 607
- EP-A2- 0 389 406
- WO-A-2004/065140

## Description

La présente invention concerne un pneumatique comprenant un organe électronique et un procédé de fabrication d'un tel pneumatique.

Elle s'applique en particulier, mais non exclusivement, à un pneumatique de véhicule automobile de type poids lourd. Un pneumatique pour un véhicule de type poids lourd comprend généralement une nappe carcasse munie de fils métalliques, ceci à la différence d'un pneumatique pour véhicule de tourisme qui comprend généralement des fils de nappe carcasse en matériau non métallique, par exemple en rayonne, nylon ou polyester.

On définira les directions axiale, radiale et circonférentielle d'un pneumatique relativement à l'axe de révolution de ce pneumatique.

On connaît déjà dans l'état de la technique, notamment d'après EP-A-0 389 406, un pneumatique comprenant un organe électronique. Dans ce document, l'organe électronique comprend un transpondeur à identification par radiofréquence passif muni de deux antennes formant dipôle. Ce type de transpondeur est généralement désigné par le sigle anglais RFID. Un tel organe peut stocker des données, par exemple, relatives à la fabrication du pneumatique.

Le pneumatique décrit dans EP-A-0 389 406, notamment illustré à la figure 2 de ce document, comprend une tringle annulaire, de révolution autour d'un axe coïncidant sensiblement avec l'axe de révolution du pneumatique, et une nappe carcasse, de forme générale toroïdale coaxiale à la tringle, comprenant une partie repliée autour de la tringle.

Le transpondeur est positionné dans la masse du pneumatique si bien qu'il crée dans le pneumatique une interface de matières, à savoir l'interface définie par la jonction entre au moins une première masse de gomme et une deuxième masse formée par le transpondeur.

Dans EP-A-0 389 406, une partie du transpondeur, en particulier une des antennes, s'étend dans le volume compris entre la partie repliée de la nappe carcasse et une partie de cette nappe carcasse en vis-à-vis axialement de la partie repliée.

Or, on constate que le positionnement du transpondeur proposé dans EP 0 389 406 n'est pas optimisé pour la transmission par radiofréquence des données stockées dans le transpondeur, ceci en raison de la proximité des masses métalliques avec lesquelles il interagit, notamment des fils métalliques de la nappe carcasse.

L'invention a notamment pour but d'optimiser la position d'un organe électronique, tel qu'un transpondeur, dans la masse du pneumatique de façon à optimiser la transmission des données stockées dans le transpondeur, ceci sans modifier les principales étapes de fabrication du pneumatique ni son architecture.

A cet effet, l'invention a pour objet un pneumatique, du type comprenant:
- au moins une tringle annulaire de révolution autour d'un axe de référence,
- une nappe carcasse, de forme générale toroïdale, coaxiale à la tringle, comprenant une partie repliée autour de la tringle,
- une interface de matières définie au moins en partie par la jonction entre une première masse de gomme et une deuxième masse comprenant un organe électronique,
**caractérisé en ce que** l'interface s'étend radialement, en s'éloignant de l'axe de référence, depuis un bord libre de la partie repliée de la nappe carcasse jusqu'à une ligne circonférentielle de jonction entre l'interface et la nappe carcasse.

La position de l'organe électronique selon l'invention permet, une transmission optimale des données enregistrées sur l'organe électronique. Cette position permet notamment d'éviter qu'une partie de l'organe électronique ne s'étende dans le volume compris entre la partie repliée et la partie de la nappe carcasse en vis-à-vis axialement. Ainsi, les masses métalliques, et plus particulièrement les fils de la nappe carcasse, perturbent peu la transmission des données enregistrées sur l'organe électronique.

Par ailleurs, on distingue généralement trois zones dans un pneumatique, un sommet, destiné à former sensiblement une partie du pneumatique en contact avec le sol, des bourrelets, destinés à former une partie radialement interne du pneumatique et permettant notamment l'accroche du pneumatique sur une jante, et des flancs reliant les bourrelets et le sommet. L'interface définie conformément à l'invention se situe dans un bourrelet du pneumatique. La rigidité élevée des bourrelets relativement aux flancs limite leurs déformations dues au roulage du pneumatique. Ces déformations et notamment celles à proximité de l'organe électronique n'engendrent donc que des contraintes faibles au voisinage de l'interface qui ne nuisent donc pas à l'endurance mécanique du pneumatique et à l'intégrité de l'organe électronique.

Enfin, l'organe électronique est protégé vis-à-vis de sollicitations extérieures. En effet, la deuxième masse de gomme est protégée par une épaisseur de gomme permettant d'amortir d'éventuelles sollicitations extérieures comme un choc ou un frottement du pneumatique contre un trottoir.

Avantageusement, l'organe électronique est éloigné radialement du bord libre de la partie repliée d'au moins 10 mm, de préférence d'au moins 15 mm.

L'éloignement entre l'organe électronique et le bord libre permet de préserver l'endurance mécanique du pneumatique. En effet, le bord libre de la nappe carcasse forme une singularité de structure du pneumatique par sa nature métallique rigide. Or, toute singularité radiale dans la structure d'un pneumatique forme une zone critique pour l'endurance mécanique du pneumatique. Ainsi, l'éloignement entre l'organe électronique et le bord libre évite d'amplifier une telle singularité et permet d'obtenir une bonne endurance mécanique du pneumatique.

Avantageusement, le pneumatique comprenant une nappe de renfort métallique annulaire intercalée radialement entre l'axe de référence et l'organe électronique, cet organe électronique est éloigné d'un bord radialement externe de la nappe de renfort d'au moins 10 mm, de préférence d'au moins 15 mm.

Le bord radialement externe de la nappe de renfort forme également une singularité de structure du pneumatique. Les avantages conférés par l'éloignement de l'organe électronique de ce bord de la nappe de renfort sont donc similaires à ceux relatifs au bord libre de la nappe carcasse.

De préférence, l'interface est définie également par la jonction entre la première masse de gomme et une troisième masse de gomme, la deuxième masse étant intercalée axialement localement entre les première et troisième masses de gomme.

Le cas échéant, la première masse est une masse de bourrage d'un volume compris entre la partie repliée de la nappe carcasse et une partie de cette nappe carcasse en vis-à-vis axialement de cette partie repliée.

De préférence, la troisième masse de gomme est une masse de bourrage recouvrant, au moins partiellement, la partie repliée de la nappe carcasse en étant séparée localement de la première masse par cette partie repliée.

D'une manière générale, une interface de matières entre différentes masses de gomme forme également une zone critique. Ainsi, lors du roulage du pneumatique, chacune des masses de gomme dont la jonction définit l'interface est soumise à des déformations susceptibles de générer des contraintes particulières d'autant plus élevées à cette interface que les natures de ces mêmes gommes diffèrent. Ces différences sont à l'origine de forces de cisaillement à l'interface, d'où le caractère critique de l'interface entre différentes masses de gomme.

Dans le cas où l'interface est définie par la jonction entre des masses de gomme de nature proche, sinon identique, comme le sont habituellement les première et troisième masses de gomme de bourrage, l'endurance mécanique du pneumatique n'est pas détériorée. En effet, les déformations de chacune des masses de gomme sont sensiblement similaires. Par conséquent, les différences de déformation entre les masses de gomme sont réduites. Ainsi, l'interface définie conformément à l'invention, bien que formant une zone critique, ne détériore pas l'endurance mécanique du pneumatique.

Selon une caractéristique optionnelle du pneumatique selon l'invention, l'organe électronique a une forme générale allongée suivant une direction sensiblement circonférentielle.

L'organe électronique permet ainsi une transmission optimale des données qu'il stocke. En particulier, on notera que, l'organe électronique étant allongé suivant la direction sensiblement circonférentielle, toute partie de l'organe électronique est sensiblement à distance constante, axialement et radialement, de la tringle annulaire et de toute nappe métallique, en particulier de la nappe carcasse et de la nappe de renfort.

Selon une autre caractéristique optionnelle du pneumatique selon l'invention, la deuxième masse comprend une masse de gomme d'enrobage de l'organe électronique.

De préférence, le module en extension de la gomme de la masse de gomme d'enrobage est similaire au module en extension d'au moins une des gommes des première et troisième masses.

Par similaire, on entend un écart de module inférieur à 10% et par module en extension, un module obtenu par une sollicitation d'extension uniaxiale de 10 % après un cycle d'accommodation et à une température de 22 °C.

De façon avantageuse, la constante diélectrique relative de la gomme de la masse d'enrobage est inférieure à la constante diélectrique relative d'au moins une des gommes des première et troisième masses.

Grâce à une telle gomme d'enrobage, la transmission des données stockées par l'organe électronique est améliorée. En effet, d'une manière générale, plus la constante diélectrique de la masse de gomme enrobant l'organe électronique est élevée, plus le signal électrique reçu et émis par l'organe électronique est atténué. Les constantes diélectriques des première et troisième masses de gomme étant élevées, généralement supérieures à 10 dans la gamme UHF (supérieure à 300 MHz), la transmission des données est fortement améliorée dans le cas où la constante diélectrique relative de la gomme de la masse d'enrobage est inférieure aux constantes diélectriques relatives des gommes des première et troisième masses dans le domaine de fréquence utilisé. De préférence, la constante diélectrique de la masse de gomme d'enrobage est inférieure à 3 dans la gamme de fréquences UHF.

De préférence, la masse de gomme d'enrobage a une longueur limitée dans la direction circonférentielle n'excédant la longueur de l'organe électronique dans la direction circonférentielle que de quelques millimètres à chacune de ses extrémités. Par quelques millimètres, on entend de l'ordre de deux à trois millimètres.

De préférence, l'organe électronique comprend un transpondeur à identification par radiofréquence passif muni de deux antennes formant dipôle.

L'invention a également pour objet un procédé de fabrication d'un pneumatique comprenant un organe électronique, procédé du type dans lequel:
- on fabrique une ébauche cylindrique comprenant une tringle annulaire intercalée entre une nappe carcasse annulaire et une première masse de gomme, et
- on replie, autour de la tringle, une partie de la nappe carcasse sur la première masse de gomme de façon à laisser libre une surface de cette première masse,
caractérisé en ce que l'organe électronique est positionné sur la surface de la première masse de gomme laissée libre par le repli de la nappe carcasse sur la première masse.

Un tel procédé permet de fabriquer un pneumatique comprenant un organe électronique sans modifier ni l'ordre des étapes d'un procédé de fabrication d'un pneumatique ne comprenant pas d'organe électronique, ni la structure d'un tel pneumatique.

L'invention sera mieux comprise à la lecture de la description qui va suivre, donnée uniquement à titre d'exemple non limitatif et faite en se référant aux dessins dans lesquels :
- la figure 1 est une vue en coupe radiale d'une partie d'un pneumatique selon l'invention ;
- la figure 2 est une vue en perspective de la partie du pneumatique de la figure 1, avec des arrachements ;
- la figure 3 est une vue de détail de la figure 1.

Sur les figures, on a représenté des axes X, Y, Z orthogonaux entre eux correspondant aux orientations habituelles radiale (X), axiale (Y) et circonférentielle (Z) d'un pneumatique.

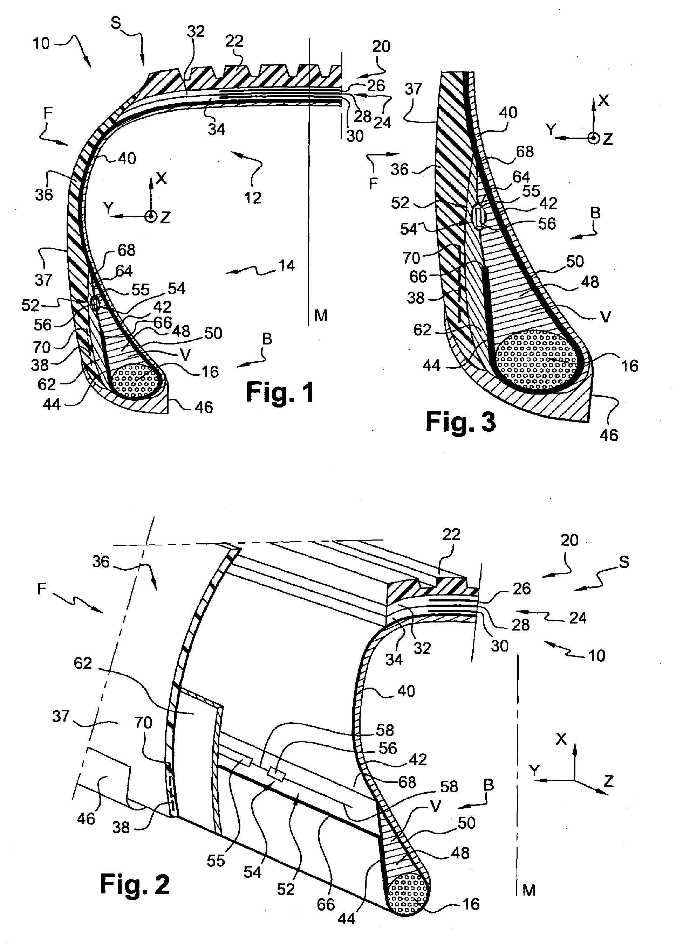

On a représenté sur les figures 1 et 2 un pneumatique selon l'invention désigné par la référence générale 10. En l'espèce, le pneumatique 10 est destiné à être monté sur une roue de véhicule automobile de type poids lourd.

De façon classique, le pneumatique 10 comprend un sommet S prolongé par deux flancs F et deux bourrelets B. Un seul flanc F et un seul bourrelet B sont représentés sur les figures.

Deux tringles 16 (une seule est représentée) sont noyées dans les bourrelets B. Les deux tringles 16 sont agencées symétriquement par rapport à un plan radial médian M du pneumatique.

Chaque tringle 16 est de révolution autour d'un axe de référence. Cet axe de référence, sensiblement parallèle à la direction Y, est sensiblement confondu avec un axe de révolution du pneumatique.

Le sommet S comprend une bande de roulement 20, munie de sculptures 22, ainsi qu'une armature 24. Cette armature 24 comprend des nappes métalliques 26, 28 et 30 noyées dans des masses de gomme 32 et 34.

Une masse de gomme 36 s'étend radialement du sommet jusqu'au niveau de la tringle 16 du bourrelet B en délimitant une surface extérieure 37 du flanc F et du bourrelet B.

De plus, dans l'exemple décrit, le bourrelet B comprend une nappe annulaire 38 constituée de renforts métalliques inclinés par rapport à la direction circonférentielle.

Le pneumatique 10 comprend également une nappe de gomme intérieure étanche 40 ainsi qu'une nappe carcasse 42. Ces nappes 40 et 42 sont de forme générale toroïdale et sont toutes deux coaxiales aux tringles 16. Les nappes 40 et 42 s'étendent entre les deux tringles annulaires 16 du pneumatique 10 en passant par le sommet S.

Dans le bourrelet B du pneumatique 10, la nappe carcasse 42 comprend une partie repliée 44 autour de la tringle 16. Le bourrelet B comprend également une masse de gomme de protection 46 annulaire destinée à permettre, en partie, l'accrochage radial et axial du pneumatique 10 sur une jante.

Le bourrelet B du pneumatique 10 comprend également une première masse de gomme 48 pour le bourrage d'un volume V compris entre la partie repliée 44 de la nappe carcasse 42 et une partie 50 de la nappe carcasse 42 en vis-à-vis axialement de la partie repliée 44.

Le bourrelet B du pneumatique 10 comprend également, dans au moins celui représenté aux figures 1 à 3, une deuxième masse 52 comprenant un organe électronique 54 optionnellement enrobé d'une masse de gomme 55. De préférence, l'organe électronique 54 a une forme générale allongée suivant une direction sensiblement circonférentielle (parallèle à l'axe Z). En l'espèce, l'organe 54 comprend un transpondeur à identification par radiofréquence (RFID) passif 56 muni de deux antennes 58 formant dipôle.

Comme représenté sur les figures, le bourrelet B comprend aussi une troisième masse de gomme 62. Cette troisième masse 62 forme une masse de bourrage recouvrant, au moins partiellement, la partie repliée 44 de la nappe carcasse 42. La troisième masse 62 est séparée localement de la première masse 48 par la partie repliée 44.

La jonction entre la première masse 48 et la deuxième masse 52 comprenant l'organe électronique 54 définit au moins en partie une interface 64 de matières représentée en traits pointillés sur les figures 1 et 3. Cette interface 64 est également définie par la jonction entre la première masse 48 et la troisième masse 62.

De cette façon et comme représenté sur les figures, la deuxième masse 52 est intercalée axialement localement entre les première et troisième masses de gomme 48 et 62.

L'interface 64 s'étend radialement, en s'éloignant de l'axe de référence, depuis un bord libre 66 de la partie repliée 44 de la nappe carcasse 42 jusqu'à une ligne circonférentielle 68 de la jonction entre l'interface 64 et la nappe carcasse 42.

Comme cela est représenté sur les figures, l'organe électronique 54 est éloigné radialement du bord libre 66 de la partie repliée 44 d'au moins 10 mm. De préférence, l'organe électronique 54 est radialement éloigné d'au moins 15 mm du bord libre 66 de la partie repliée 44.

La nappe annulaire 38 de renfort métallique étant intercalée radialement entre l'axe de référence et l'organe électronique 54 et axialement extérieurement à l'interface considérée, l'organe électronique 54 est éloigné d'un bord 70 radialement externe de la nappe 38 de renfort d'au moins 10 mm, de préférence d'au moins 15 mm.

De plus, le module d'extension de la gomme de la masse de gomme d'enrobage 55 de l'exemple représenté sur les figures est similaire au module d'extension d'au moins une des gommes des première et troisième masses 48 et 62.

Aussi, la constante diélectrique relative de la gomme de la masse de gomme d'enrobage 55 est inférieure à la constante diélectrique relative d'au moins une des gommes des première et troisième masses 48 et 62.

En outre, la masse de gomme d'enrobage 55 a une longueur limitée dans la direction circonférentielle n'excédant la longueur de l'organe électronique 54 dans la direction circonférentielle que de quelques millimètres à chacune de ses extrémités.

Les principaux aspects du procédé de fabrication d'un pneumatique 10 selon l'invention vont à présent être décrits.

On fabrique tout d'abord une ébauche crue de forme générale cylindrique dont la vulcanisation formera ce pneumatique 10.

Dans la description de ce procédé, on notera que les références désignant précédemment les différentes masses de gomme vulcanisées désignent également les masses de gomme non vulcanisées correspondantes.

Usuellement, pour fabriquer l'ébauche, on met en place la nappe carcasse 42 puis on vient placer sur cette nappe carcasse 42 de chaque côté les tringles 16 et les premières masses 48. On retourne alors les extrémités 44 de manière à recouvrir ces deux tringles et une partie des premières masses 48 laissant ainsi une surface libre.

Une première variante consiste à venir déposer la seconde masse 52 sur la surface libre de la première masse 48.

Selon une deuxième variante, la seconde masse 52 est déposée sur la surface destinée à rester libre de la première masse 48 avant que cette masse 48 ne soit posée sur la nappe carcasse 42.

Enfin, on place sur l'ébauche (quelle que soit la variante) les autres masses de gomme et les autres masses métalliques conformément à des étapes classiques de fabrication du pneumatique 10. Dans l'exemple décrit, on place notamment la troisième masse de gomme 62, la masse de gomme 36 destinée à délimiter la surface extérieure des flancs et des bourrelets, la masse de gomme 46 de protection, les nappes métalliques 26, 28 et 30 et les masses de gommes 32 et 34.

## Revendications

1. Pneumatique (10), du type comprenant:
- au moins une tringle (16) annulaire de révolution autour d'un axe de référence,
- une nappe carcasse (42), de forme générale toroïdale, coaxiale à la tringle (16), comprenant une partie repliée (44) autour de la tringle (16),
- une interface (64) de matières définie au moins en partie par la jonction entre une première masse de gomme (48) et une deuxième masse (52) comprenant un organe électronique (54),
**caractérisé en ce que** l'interface (64) s'étend radialement, en s'éloignant de l'axe de référence, depuis un bord libre (66) de la partie repliée (44) de la nappe carcasse (42) jusqu'à une ligne circonférentielle (68) de jonction entre l'interface et la nappe carcasse (42).

2. Pneumatique (10) selon la revendication 1, dans lequel l'organe électronique (54) est éloigné radialement du bord libre (66) de la partie repliée (44) d'au moins 10 mm, de préférence d'au moins 15 mm.

3. Pneumatique (10) selon la revendication 1 ou 2, dans lequel, le pneumatique (10) comprenant une nappe de renfort (38) métallique annulaire intercalée radialement entre l'axe de référence et l'organe électronique (54), cet organe électronique (54) est éloigné d'un bord (70) radialement externe de la nappe de renfort (38) d'au moins 10 mm, de préférence d'au moins 15 mm.

4. Pneumatique (10) selon l'une quelconque des revendications précédentes, dans lequel l'interface (64) est définie également par la jonction entre la première masse (48) de gomme et une troisième masse (62) de gomme, la deuxième masse (52) étant intercalée axialement localement entre les première et troisième masses de gomme (48, 62).

5. Pneumatique (10) selon l'une quelconque des revendications précédentes, dans lequel la première masse (48) est une masse de bourrage d'un volume compris entre la partie repliée (44) de la nappe carcasse (42) et une partie (50) de cette nappe carcasse (42) en vis-à-vis axialement de cette partie repliée (44).

6. Pneumatique (10) selon la revendication 4, dans lequel la troisième masse (62) de gomme est une masse de bourrage recouvrant, au moins partiellement, la partie repliée (44) de la nappe carcasse (42) en étant séparée localement de la première masse (48) par cette partie repliée (44).

7. Pneumatique (10) selon l'une quelconque des revendications précédentes, dans lequel l'organe électronique (54) a une forme générale allongée suivant une direction sensiblement circonférentielle.

8. Pneumatique (10) selon l'une quelconque des revendications précédentes, dans lequel la deuxième masse (52) comprend une masse de gomme d'enrobage (55) de l'organe électronique (54).

9. Pneumatique (10) selon les revendications 4 et 8 prises ensemble, dans lequel le module en extension de la gomme de la masse de gomme d'enrobage (55) est similaire au module en extension d'au moins une des gommes des première et troisième masses (48, 62).

10. Pneumatique (10) selon les revendications 4 et 8 prises ensemble, dans lequel la constante diélectrique relative de la gomme de la masse de gomme d'enrobage (55) est inférieure à la constante diélectrique relative d'au moins une des gommes des première et troisième masses (48, 62).

11. Pneumatique (10) selon l'une quelconque des revendications 8 à 10, dans lequel la masse de gomme d'enrobage (55) a une longueur limitée dans la direction circonférentielle n'excédant la longueur de l'organe électronique (54) dans la direction circonférentielle que de quelques millimètres à chacune de ses extrémités.

12. Pneumatique (10) selon l'une quelconque des revendications précédentes, dans lequel l'organe électronique (54) comprend un transpondeur à identification par radiofréquence passif (56) muni de deux antennes formant dipôle (58).

13. Procédé de fabrication d'un pneumatique (10) comprenant un organe électronique (54), procédé du type dans lequel :
- on fabrique une ébauche cylindrique comprenant une tringle (16) annulaire intercalée entre une nappe carcasse annulaire et une première masse de gomme (48), et
- on replie, autour de la tringle (16), une partie (44) de la nappe carcasse (42) sur la première masse (48) de gomme de façon à laisser libre une surface de cette première masse,
**caractérisé en ce que** l'organe électronique est positionné sur la surface de la première masse de gomme laissée libre par le repli de la nappe carcasse sur la première masse.

## Claims

1. Tire (10) comprising:
- at least one annular bead wire (16) forming a body of revolution about a reference axis;
- a carcass ply (42) of generally toroidal shape, about the same axis as the bead wire (16), and including a portion (44) folded around the wire (16);
- a materials interface (64) defined at least in part by the junction between a rubber first mass (48) and a second mass (52) including an electronic member (54);
**characterized in that** the interface (64) extends from a free edge (66) of the folded portion (44) of the carcass ply (42) radially away from the reference axis to a circumferential junction line (68) between the interface and the carcass ply (42).

2. Tire (10) according to claim 1, in which the electronic member (54) is radially offset away from the free edge (66) of the folded portion (44) by at least 10 mm, preferably by at least 15 mm.

3. Tire (10) according to claim 1 or 2, in which, for the tire (10) having an annular metal reinforcing ply (38) radially interposed between the reference axis and the electronic member (54), said electronic member (54) is offset away from a radially outer edge (70) of the reinforcing ply (38) by at least 10 mm, preferably at least 15 mm.

4. Tire (10) according to any one of the preceeding claims, in which the interface (64) is also defined by the junction between the rubber first mass (48) and a rubber third mass (62), the second mass (52) being axially interposed locally between the rubber first and third masses (48, 62).

5. Tire (10) according to any one of the preceeding claims, in which the first mass (48) is a mass for filling a volume that extends between the folded portion (44) of the carcass ply (42) and a portion (50) of said carcass ply (42) axially facing said folded portion (44).

6. Tire (10) according to claim 4, in which the rubber third mass (62) is a filler mass, covering at least in part, the folded portion (44) of the carcass ply (42), being locally separated from the first mass (48) by said folded portion (44).

7. Tire (10) according to any one of the preceeding claims, in which the electronic member (54) is generally elongate in shape along a direction that is substantially circumferential.

8. Tire (10) according to any one of the preceeding claims, in which the second mass (52) includes a coating rubber mass (55) coating the electronic member (54).

9. Tire (10) according to claims 4 and 8 taken together, in which the extension modulus of the rubber of the coating rubber mass (55) is similar to the extension modulus of at least one of the rubbers of the first and third masses (48, 62).

10. Tire (10) according to claims 4 and 8 taken together, in which the relative dielectric constant of the rubber of the coating rubber mass (55) is less than the relative dielectric constant of at least one of the rubbers of the first and third masses (48, 62).

11. Tire (10) according to any one of claims 8 to 10, in which the coating rubber mass (55) is of limited length in the circumferential direction, exceeding the length of the electronic member in the circumferential direction by only a few millimeters at each of its ends.

12. Tire (10) according to any one of the preceeding claims, in which the electronic member (54) comprises a passive radiofrequency identification transponder (56) provided with two antennas forming a dipole (58).

13. Method of fabricating a tire (10) including an electronic member (54), comprising the steps of:
- fabricating a cylindrical blank including an annular bead wire (16) interposed between an annular carcass ply and a rubber first mass (48); and
- folding a portion (44) of the carcass ply (42) around the wire (16) onto the rubber first mass (48) so as to leave a surface of said first mass free;
**characterized in that** the electronic member is positioned on the surface of the rubber first mass that is left free when the carcass ply is folded onto the first mass.

## Patentansprüche

1. Luftreifen (10) von dem Typ, der enthält:
- mindestens einen ringförmigen Wulstkern (16), der um eine Bezugsachse drehsymmetrisch ist,
- eine Karkassenlage (42) von allgemeiner Torusform koaxial zum Wulstkern (16), die einen um den Wulstkern (16) herum umgeschlagenen Teil (44) enthält,
- eine Materialgrenzfläche (64), die zumindest zum Teil durch die Verbindung zwischen einer ersten Gummimasse (48) und einer zweiten Gummimasse (52) definiert wird, die ein elektronisches Gerät (54) enthält,
**dadurch gekennzeichnet, dass** die Grenzfläche (64) sich radial weg von der Bezugsachse ausgehend von einem freien Rand (66) des umgeschlagenen Teils (44) der Karkassenlage (42) bis zu einer Umfangsverbindungslinie (68) zwischen der Grenzfläche und der Karkassenlage (42) erstreckt.

2. Luftreifen (10) nach Anspruch 1, bei dem das elektronische Gerät (54) vom freien Rand (66) des umgeschlagenen Teils (44) radial mindestens 10 mm, vorzugsweise mindestens 15 mm, entfernt ist.

3. Luftreifen (10) nach Anspruch 1 oder 2, bei dem, wenn der Luftreifen (10) eine ringförmige metallische Verstärkungslage (38) enthält, die radial zwischen die Bezugsachse und das elektronische Gerät (54) eingefügt ist, dieses elektronische Gerät (54) von einem radial äußeren Rand (70) der Verstärkungslage (38) mindestens 10 mm, vorzugsweise mindestens 15 mm, entfernt ist.

4. Luftreifen (10) nach einem der vorhergehenden Ansprüche, bei dem die Grenzfläche (64) ebenfalls durch die Verbindung zwischen der ersten Gummimasse (48) und einer dritten Gummimasse (62) definiert wird, wobei die zweite Masse (52) lokal zwischen die erste und die dritte Gummimasse (48, 62) eingefügt ist.

5. Luftreifen (10) nach einem der vorhergehenden Ansprüche, bei dem die erste Masse (48) eine Füllmasse mit einem Volumen ist, das zwischen dem umgeschlagenen Teil (44) der Karkassenlage (42) und einem Teil (50) dieser Karkassenlage (42) enthalten ist, der diesem umgeschlagenen Teil (44) axial gegenüberliegt.

6. Luftreifen (10) nach Anspruch 4, bei dem die dritte Gummimasse (62) eine Füllmasse ist, die zumindest teilweise den umgeschlagenen Teil (44) der Karkassenlage (42) bedeckt, wobei sie lokal von der ersten Masse (48) durch diesen umgeschlagenen Teil (44) getrennt ist.

7. Luftreifen (10) nach einem der vorhergehenden Ansprüche, bei dem das elektronische Gerät (54) eine allgemein längliche Form im Wesentlichen gemäß einer Umfangsrichtung hat.

8. Luftreifen (10) nach einem der vorhergehenden Ansprüche, bei dem die zweite Masse (52) eine Gummimasse (55) zur Umhüllung des elektronischen Geräts (54) enthält.

9. Luftreifen (10) nach den Ansprüchen 4 und 8 zusammen genommen, bei dem der Dehnungsmodul des Gummis der Umhüllungsgummimasse (55) gleich dem Dehnungsmodul mindestens eines der Gummis der ersten und der dritten Masse (48, 62) ist.

10. Luftreifen (10) nach den Ansprüchen 4 und 8 zusammen genommen, bei dem die Dielektrizitätskonstante des Gummis der Umhüllungsgummimasse (55) geringer als die relative Dielektrizitätskonstante mindestens eines der Gummis der ersten und der dritten Masse (48, 62) ist.

11. Luftreifen (10) nach einem der Ansprüche 8 bis 10, bei dem die Umhüllungsgummimasse (55) eine in Umfangsrichtung begrenzte Länge hat, die die Länge des elektronischen Geräts (54) in Umfangsrichtung nur um einige Millimeter an jedem seiner Enden überschreitet.

12. Luftreifen (10) nach einem der vorhergehenden Ansprüche, bei dem das elektronische Gerät (54) einen passiven Transponder mit Funkfrequenzidentifizierung (56) enthält, der mit zwei einen Dipol bildenden Antennen (58) versehen ist.

13. Verfahren zur Herstellung eines ein elektronisches Gerät (54) enthaltenden Luftreifens (10), Verfahren von dem Typ, bei dem:
- ein zylindrischer Rohling hergestellt wird, der einen ringförmigen Wulstkern (16) enthält, welcher zwischen eine ringförmige Karkassenlage und eine erste Gummimasse (48) eingefügt ist, und
- um den Wulstkern (16) herum ein Teil (44) der Karkassenlage (42) so auf die erste Gummimasse (48) umgeschlagen wird, dass eine Fläche dieser ersten Masse frei gelassen wird,
**dadurch gekennzeichnet, dass** das elektronische Gerät auf der Fläche der ersten Gummimasse positioniert wird, die vom Umschlag der Karkassenlage auf die erste Masse frei gelassen wird.
